Europäisches Patentamt

(19) European Patent Office

Office européen des brevets

(11) Veröffentlichungsnummer: **0 136 399**
**A1**

(12) # EUROPÄISCHE PATENTANMELDUNG

(21) Anmeldenummer: **84105309.3**

(22) Anmeldetag: **10.05.84**

(51) Int. Cl.⁴: **G 01 T 1/06**

(30) Priorität: **07.07.83 DE 8319619 U**

(43) Veröffentlichungstag der Anmeldung:
**10.04.85 Patentblatt 85/15**

(84) Benannte Vertragsstaaten:
**DE FR GB**

(71) Anmelder: **Felten & Guilleaume Energietechnik GmbH**
**Schanzenstrasse 24**
**D-5000 Köln 80(DE)**

(72) Erfinder: **Levacher, Friedrich Karl, Dr.**
**Medardusstrasse 24**
**D-5024 Brauweiler(DE)**

(72) Erfinder: **Federmann, Helmut, Dr.**
**Holunderweg 17**
**D-5060 Berg. Gladbach(DE)**

(54) Regenerierbarer Lichtwellenleiter-Strahlensensor.

(57) Ein Lichtwellenleiter ist dadurch als Strahlensensor, der durch Stromwärme regenerierbar ist, ausgebildet, daß unmittelbar über der Lichtleit-Glasfaser (1) eine Metallhülle (2) angeordnet und an den Enden mit Anschlußkontakten für eine Heizstromquelle versehen ist, und daß darüber ein thermisch isolierender Mantel (3) angeordnet ist.

FIG. 1

EP 0 136 399 A1

Croydon Printing Company Ltd

F1 4689                         1                    06.07.83

## Regenerierbarer Lichtwellenleiter-Strahlensensor

Die Erfindung betrifft einen Lichtwellenleiter, der aus einer Lichtleit-Glasfaser, darum einer elektrisch gut leitenden und korrosionsfesten Metallschicht und einem äußeren Mantel aus Kunststoff besteht und der für den Einsatz als Strahlensensor, der durch Wärme regenerierbar ist, ausgebildet ist.

Lichtwellenleiter (LWL), die ihre Dämpfung (Lichttrübung) unter Einwirkung von radioaktiven Strahlen erhöhen, sind bekannt. So ist in der US-PS 2 972 051 ein Dosimeter beschrieben, das aus einem LWL besteht, der um einen Dorn gewickelt ist, und in dem DE-GM 82 12 823 ist ein LWL-Sensor für kleine radioaktive Strahlendosen beschrieben.

Weiter ist bereits in der DE-OS 25 27 769 ein Lichtwellenleiter der eingangs angegebenen Art beschrieben, genauer eine Lichtleitfaser für optische Nachrichtenübertragung, ohne daß auf deren Einsatz als Strahlensensor Bezug genommen ist.

Weiter ist bekannt, daß Lichtwellenleiter aus Quarzglas, die als Strahlensensoren eingesetzt werden und deren Dämpfung unter der Einwirkung radioaktiver Strahlen angestiegen ist, durch Wärmebehandlung wieder ihre niedrige Ausgangsdämpfung annehmen können. Solche Regenerierprozesse werden bisher im Labor vorgenommen, indem der LWL in einen Wärmeschrank gelegt und für einige Zeit aufgeheizt wird. Dieses Verfahren ist jedoch in der Praxis nur selten anwendbar.

Der Erfindung liegt daher die Aufgabe zugrunde, einen Lichtwellenleiter der eingangs geschilderten Art so auszubilden,
daß er beim Einsatz als Strahlensensor auf einfache Weise
durch Wärme regenerierbar ist.

Diese Aufgabe wird erfindungsgemäß durch die kennzeichnenden
Merkmale des Anspruchs 1 gelöst.

Die für die Erfindung wesentliche, unmittelbar über der Glasfaser angeordnete Metallhülle kann statt als zusammenhängende
Schicht auch als offene Hülle aus Metalldrähten ausgebildet
sein (Anspruch 2). Bevorzugte Materialien und Dimensionierungen sind im Anspruch 3 angegeben.

Zwei Ausführungsbeispiele der Erfindung sind in der Zeichnung
angegeben und werden im folgenden näher beschrieben. Es zeigen
Fig. 1 einen regenerierbaren LWL-Strahlensensor mit einer
       Metallschicht und
Fig. 2 den Sensor mit einer offenen Hülle aus Metalldrähten.
Bezeichnet sind mit
1 LWL-Glasfaser
2 Metallschicht.bzw. Metalldrahthülle aus Kupfer
3 thermisch isolierender innerer Mantel aus Glasgewebe oder
  -geflecht
4 äußerer Mantel aus Kunststoff.

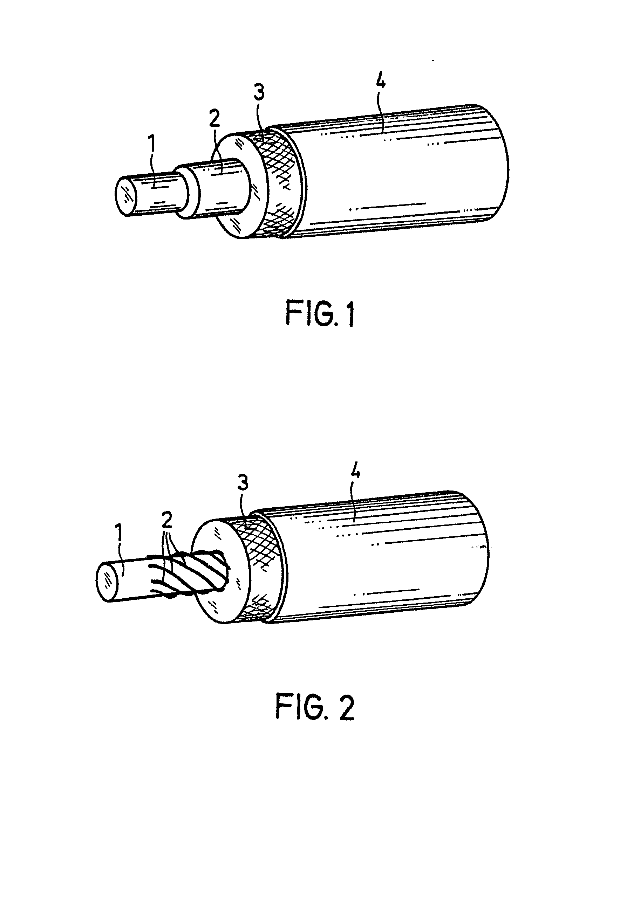

Fig. 1 zeigt eine Lichtleit-Glasfaser 1, die anstelle der
üblichen Primärcoatinghülle aus Kunststoff einen geschlossenen
Überzug 2 aus einem elektrisch leitfähigen Metall, etwa aus
Kupfer, hat. Infolge des endlichen elektrischen Widerstandes
kann diese Metallhülle durch den elektrischen Strom auf die
für den Regenerationsprozeß notwendige Temperatur gebracht
werden. Um dabei die Wärmeverluste gering zu halten, d.h. mit
möglichst niedriger elektrischer Energie auszukommen, wird die
Metallhülle 2 von einem wärmebeständigen, thermisch gut isolierenden Mantel 3 aus Glasgewebe oder -geflecht umgeben.

Darüber können dann je nach der Anwendung noch weitere Schutzschichten 4 aus Kunststoff liegen, die den Zutritt von Wasser
verhindern und mechanische Beschädigungen abfangen.

Bei der anderen Ausführungsform nach Fig. 2 steht bei sonst
gleichem Aufbau die Glasfaser 1 mit mehreren elektrisch leitenden Drähten 2 in unmittelbarer Berührung, die längslaufend
oder in gleicher Schlagrichtung um die Glasfaser gelegt sind.

Die beschriebenen Ausführungsformen des regenererbaren LWL-
Strahlensensors haben den Vorteil, daß sich der LWL über
größere Flächen oder Längen erstrecken kann und durch Anlegen
einer Spannung an seinen beiden Enden das Aufheizen, d.h.
Regenerieren, in einfacher Weise möglich wird, ohne daß der
LWL ausgebaut zu werden braucht.

Patentansprüche:

1. Lichtwellenleiter, bestehend aus einer Lichtleit-Glasfaser
(1), darum einer elektrisch gut leitenden und korrosionsfesten Metallschicht (2) und einem äußeren Mantel (4) aus
Kunststoff, ausgebildet für den Einsatz als Strahlensensor,
der durch Wärme regenerierbar ist, d a d u r c h
g e k e n n z e i c h n e t ,  daß unmittelbar über der
Glasfaser (1), ohne die sogenannte Primärcoatinghülle aus
Kunststoff, eine Metallhülle (2) von einer Dicke über 0,1 mm
angeordnet und an den Enden des LWL-Sensors mit Anschlußkontakten für eine Heizstromquelle versehen ist, und daß
darüber ein wärmebeständiger und thermisch isolierender
Mantel (3) angeordnet ist.

2. LWL-Strahlensensor nach Anspruch 1, d a d u r c h
g e k e n n z e i c h n e t ,  daß die Metallschicht als
eine offene Hülle längs aufgebrachter oder mit gleicher
Richtung um die Glasfaser (1) geschlagener Metalldrähte
(2 in Fig. 2) ausgebildet ist.

3. LWL-Strahlensensor nach Anspruch 1 oder 2, d a d u r c h
g e k e n n z e i c h n e t ,  daß die Metallhülle (2) aus
Kupfer ist und eine Dicke von mindestens 0,1 mm hat, und
daß der thermisch isolierende innere Mantel (3) aus Glasgewebe oder -geflecht ist und eine Dicke von mindestens
0,3 mm hat.

FIG. 1

FIG. 2

# Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | PATENTS ABSTRACTS OF JAPAN, Band 7, Nr. 60(P-182)(1205), 12. März 1983; & JP - A - 57 205 703 (FURUKAWA DENKI KOGYO K.K.) 16.12.1982 . * Insgesamt * | 1,2 | G 01 T 1/06 |
| Y | PATENTS ABSTRACTS OF JAPAN, Band 6, Nr. 159(P-136)(1037), 20. August 1982; & JP - A - 57 78509 (HITACHI DENSEN K.K.) 17.05.1982 * Insgesamt * | 1,2 | |
| D,Y | US-A-2 972 051 (BAUM) * Spalte 2, Zeile 48 - Spalte 3, Zeile 42 und Zeilen 59-63; Figuren * | 1,2 | |
| A | EP-A-0 006 364 (BICC LTD.) * Zusammenfassung; Figur 1 * | 1 | RECHERCHIERTE SACHGEBIETE (Int. Cl.4) G 01 T G 02 B |

Der vorliegende Recherchenbericht wurde für alle Patentansprüche erstellt.

| Recherchenort DEN HAAG | Abschlußdatum der Recherche 15-11-1984 | Prüfer DATTA S. |
|---|---|---|